# EUROPEAN PATENT APPLICATION

(11) **EP 2 693 648 A1**
(43) Date of publication of application: **05.02.2014**
(21) Application number: 12179256.8
(22) Date of filing: 03.08.2012
(51) Int. Cl.: H04B 1/52, H04B 1/00, H04B 1/48

(54) **Mobile wireless communications device with rf lte switches and related methods**

(71) Applicant: BlackBerry Limited, Waterloo, ON N2K 0A7 (CA)
(72) Inventor: Little, Christoph Robert, Waterloo, Ontario N2L 3W8 (CA); Hughes, Simon Andrew, Waterloo, Ontario N2L 3W8 (CA); George, Liviu, Waterloo, Ontario N2L 3W8 (CA)
(74) Representative: Bryn-Jacobsen, Caelia

(57) **Abstract**

A mobile wireless communications device (10) may include an antenna (11), an LTE RF transmitter circuit (12), and an LTE RF receiver circuit (13). The mobile wireless communications device may also include band pass filters (15-18) coupled to the antenna and configured to operate at respective different LTE RF bands, and RF switches (21-24) coupled respectively between the band pass filters, and the LTE RF cellular transmitter and receiver circuits.

## Description

### Technical Field

This application relates to the field of communications, and more particularly, to mobile wireless communications devices and related methods.

### Background

Cellular communication systems continue to grow in popularity and have become an integral part of both personal and business communications. Cellular telephones allow users to place and receive phone calls almost anywhere they travel. Moreover, as cellular telephone technology is advanced, so too has the functionality of cellular devices. For example, many cellular devices now incorporate Personal Digital Assistant (PDA) features such as calendars, address books, task lists, calculators, memo and writing programs, etc. These multifunction devices usually allow users to wirelessly send and receive electronic mail (email) messages and access the internet via a cellular network and/or a wireless local area network (WLAN), for example.

Cellular devices have radio frequency (RF) processing circuits and receive or transmit radio communications signals typically using modulation schemes. The typical cellular device may have multiple transmit and receive pathways from the antenna to a digital signal processor (DSP). In particular, each signal pathway may comprise a filter to help isolate the desired frequency band from extraneous electromagnetic signals, for example, noise and interference.

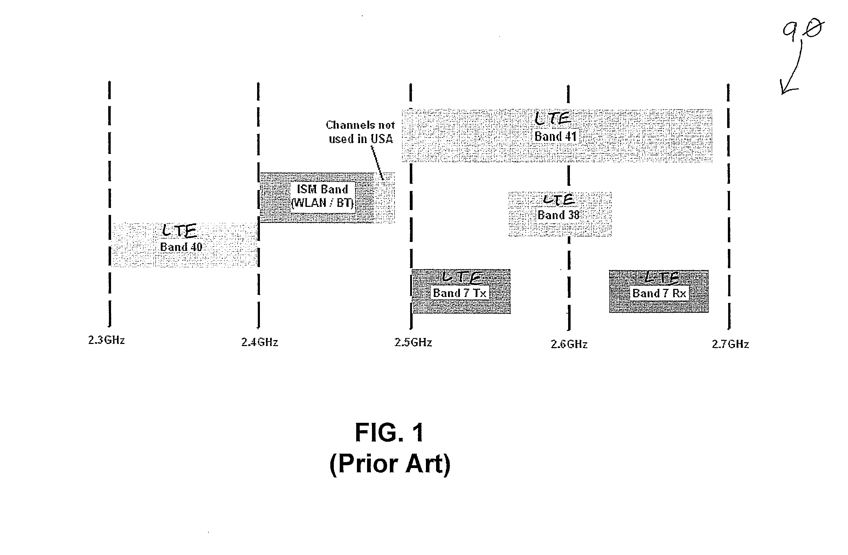

Nevertheless, as frequency bands change because of regulatory reasons, expansion, etc., and as more transceivers are added to the cellular device, the likelihood of self-interference may increase. Referring now to FIG. 1, a radio frequency (RF) spectrum 90 for a typical Long Term Evolution (LTE) RF device is shown. Due to the small spectral gap between the WLAN/Bluetooth (BT) frequency band and LTE Band 41 frequency band, the LTE cellular transceiver may desensitize the wireless local area network (WLAN) receiver during transmission periods, i.e. potentially rendering the WLAN receiver inoperative.

### Brief Description of the Drawings

FIG. 1 is a schematic diagram of the RF spectrum for a mobile wireless communications device, according to the prior art.

FIG. 2 is a schematic block diagram of an example embodiment of a mobile wireless communications device.

FIG. 3 is a schematic diagram of the RF spectrum for the mobile wireless communications device of FIG. 2.

FIG. 4 is a schematic block diagram illustrating example components of a mobile wireless communications device that may be used with the mobile wireless communications device of FIG. 2.

### Detailed Description of the Preferred Embodiments

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a mobile wireless communications device may include an antenna, an LTE RF transmitter circuit, and an LTE RF receiver circuit. The mobile wireless communications device may also include a plurality of band pass filters coupled to the antenna and configured to operate at respective different LTE RF bands, and a plurality of RF switches coupled respectively between the plurality of band pass filters, and the LTE RF cellular transmitter and receiver circuits. Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc.

The LTE RF transmitter circuit may comprise a first power amplifier (PA) configured to operate on a first LTE RF band, and a second PA configured to operate on a second, third, and fourth LTE RF bands. The LTE RF transmitter circuit may comprise an RF switch coupled to the second PA and configured to switch signals from the second, third, and fourth LTE RF bands to respective ones of the plurality of band pass filters.

More specifically, the LTE RF receiver circuit may comprise a first low-noise amplifier (LNA) configured to operate on the first and second LTE RF bands, and a second LNA configured to operate on the third and fourth LTE RF bands. The LTE RF receiver circuit may comprise a first RF switch coupled to the first LNA and configured to switch signals from the first and second LTE RF bands from respective ones of the plurality of band pass filters, and a second RF switch coupled to the second LNA and configured to switch signals from the third and fourth LTE RF bands from respective ones of the plurality of band pass filters.

For example, the first LTE RF band may comprise LTE Band 40; the second LTE RF band may comprise LTE Band 7; the third LTE RF band may comprise LTE Band 38; and the fourth LTE RF band may comprise LTE Band 41. The LTE RF transmitter circuit may be configured to operate on the LTE Bands 38 and 40 in a carrier aggregation mode.

Additionally, the mobile wireless communications device may further comprise a WLAN transceiver, and a WLAN antenna coupled thereto. The pluralities of RF switches and band pass filters may be configured to isolate the WLAN transceiver from LTE Band 41. The plurality of band pass filters may comprise a group thereof configured to cooperate with each other to pass the LTE Band 41. Each RF switch may comprise a single-pole double-throw switch.

Another aspect is directed to a method of making a mobile wireless communications device. The method may comprise providing an LTE RF transmitter circuit and an LTE RF receiver circuit, coupling a plurality of band pass filters to the antenna to operate at respective different LTE RF bands, and coupling a plurality of RF switches respectively between the plurality of band pass filters, and the LTE RF cellular transmitter and receiver circuits.

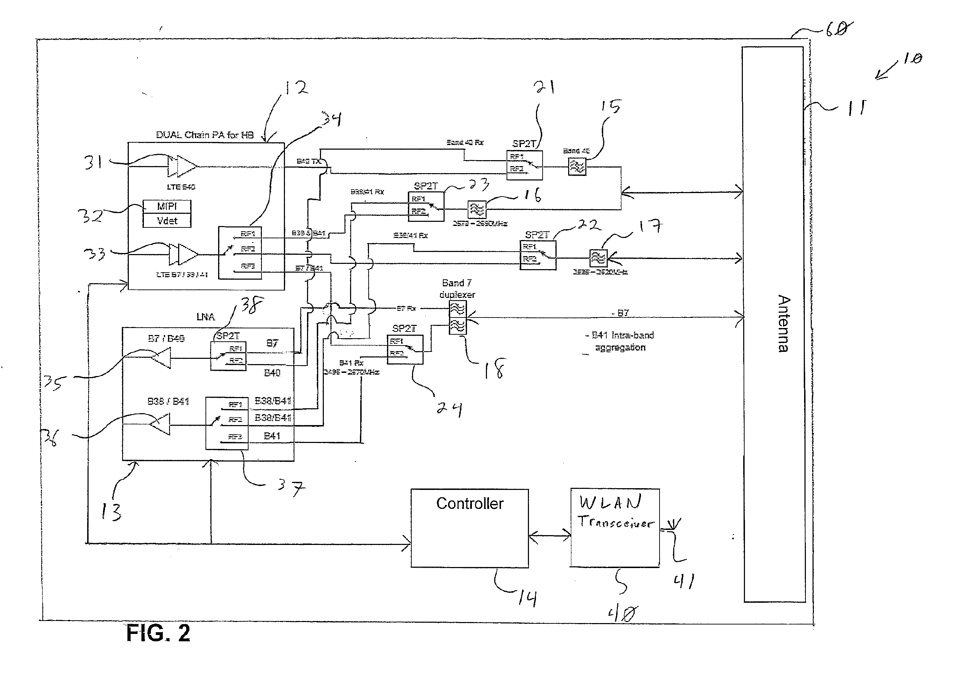

Referring now to FIG. 2, a mobile wireless communications device 10 according to the present disclosure is now described. The mobile wireless communications device **10** illustratively includes an antenna **11,** an LTE RF transmitter circuit **12,** and an LTE RF receiver circuit **13.** The mobile wireless communications device **10** illustratively includes a plurality of band pass filters **15-18** coupled to the antenna **12** and configured to operate at respective different LTE RF bands, and a plurality of RF switches **21-24** coupled respectively between the plurality of band pass filters, and the LTE RF cellular transmitter and receiver circuits **12-13.** In the illustrated embodiment, each RF switch **21-24** comprises a single-pole double-throw switch.

The LTE RF transmitter circuit **12** illustratively includes a first PA **31** configured to operate on a first LTE RF band, a second PA **33** configured to operate on a second, third, and fourth LTE RF bands, and a Mobile Industry Processor Interface (MIPI) control module **32** providing a control interface. The LTE RF transmitter circuit **12** also includes an RF switch **34** coupled upstream to the second PA **33** and configured to switch signals from the second, third, and fourth LTE RF bands to respective ones of the plurality of band pass filters **15-18.** The plurality of band pass filters **15-18** may comprise a group **16-18** thereof configured to cooperate with each other to pass the LTE Band 41.

The LTE RF receiver circuit **13** illustratively includes a first LNA **35** configured to operate on the first and second LTE RF bands, and a second LNA **36** configured to operate on the third and fourth LTE RF bands. The LTE RF receiver circuit **13** includes a first RF switch **38** coupled to the first LNA **35** and configured to switch signals from the first and second LTE RF bands from respective ones of the plurality of band pass filters **15-18,** and a second RF switch **37** coupled to the second LNA **36** and configured to switch signals from the third and fourth LTE RF bands from respective ones **16-18** of the plurality of band pass filters.

In the illustrated embodiment, the first LTE RF band may comprise LTE Band 40, the second LTE RF band may comprise LTE Band 7, the third LTE RF band may comprise LTE Band 38, and the fourth LTE RF band may comprise LTE Band **41.** Advantageously, the LTE RF transmitter circuit **12** may be configured to operate on the LTE Bands 38 and 40 in a carrier aggregation mode.

Additionally, the mobile wireless communications device **10** illustratively includes a WLAN transceiver **40,** and a WLAN antenna **41** coupled thereto, and the pluralities of RF switches **21-24** and band pass filters **15-18** may be configured to isolate the WLAN transceiver from LTE Band 41. Advantageously, the mobile wireless communications device **10** isolates LTE Band 41 (fourth LTE RF Band) by dividing it amongst three separate band pass filters **16-18.** Also, the mobile wireless communications device **10** illustratively includes a housing **60** containing the antenna **11,** the LTE RF transmitter circuit **12,** the LTE RF receiver circuit **13,** the controller **14,** the WLAN transceiver and antenna **40-41,** the plurality of band pass filters **15-18,** and the plurality of RF switches **21-24.**

Referring again briefly to FIG. 1, the cause of the de-sensitization due to the LTE transmitter can be attributed to two factors: 1) wideband transmitter (Tx) noise generated and amplified by the Tx; and 2) Adjacent Channel Power (ACP) inter-mod noise generated by the non-linearity of the final stage of the PA. The latter contribution may be the most significant when transmitting the LTE signal close to the band edge and receiving the BT/WLAN signal on a channel at the band edge nearest to the LTE Tx band.

Bulk acoustic wave (BAW) filters are an approach for both LTE Band 40 and LTE Band 7 to achieve the highest levels of selectivity and thus rejection of the LTE transmitted signal in the ISM band. They offer superior performance to surface acoustic wave (SAW) filters in this respect. LTE Band 7 up until now has been the most problematic for user equipment (UE) in terms of protecting the BT/WLAN receivers from de-sensitization. The band gap between LTE Band 7 Tx and ISM channel 13 is 16 MHz. With the approaching roll-out of Band 41 in North America, this problem may become even more challenging for TDD LTE products in the North America for two reasons: 1) the lowest band edge frequency of LTE Band 41 is 2496 MHz (it should be noted that in the USA, the highest used WLAN channel is Channel 11 (2.451 - 2.473 GHz, giving a band gap of 23 MHz, slightly wider than that for LTE Band 7); and 2) LTE Band 41 bandwidth is three times wider (2496 - 2690MHz). Stop band rejection at a given offset is inversely proportional to bandwidth in filter design.

The above points create an increased challenge to the filter designer in achieving sufficient rejection to the noise created in the ISM band. The present disclosure provides a design that can achieve a level of rejection from the LTE Band 41 Tx filter that is close to that of the LTE Band 7 duplexer (Tx side), in the ISM band. The present disclosure also provides a design that can achieve the above performance while at the same time achieving an optimized UE RF front-end design in terms of component size/count and cost. This becomes more challenging when considering a "world phone" embodiment with coverage for LTE bands in all countries. In these world phone embodiments, this design requires the following band coverage: LTE Bands 7, 40, 38, and 41 (all 2.5GHz bands). Moreover, the present disclosure may provide a design that may meet the requirement for 2014 products, i.e. including the capability to transmit in Carrier Aggregation Class C with two adjacent 20MHz component carriers (40 MHz).

The mobile wireless communications device 10 may provide an approach to the above problems. The front-end architecture proposed herein provides an approach to the problem outlined above by splitting up the LTE Band 41 spectrum in to three narrower sub-bands. This requires filters with narrower bandwidths, which offer higher levels of selectivity and thus better rejection in the ISM band.

The architecture herein may provide the following advantages: 1) band coverage for all 2.5 GHz bands (LTE Bands 40, 7, 38, and 41); 2) optimum level of Tx noise rejection in the ISM band when transmitting in LTE Band 41; 3) lowest component count and cost for a front-end covering the above bands; 4) capable of two adjacent 20 MHz component carriers (uplink and downlink carrier aggregation) achieved through spectral overlapping (by 35 MHz) of all the filters used to cover LTE Band 41; 5) minimal/acceptable level of performance degradation of Tx efficiency and Rx insertion loss/self de-sensitization; and 6) capability of uplink inter-band carrier aggregation across LTE Bands 40 and 38 (used in Asia)

The LTE RF transmitter circuit **12** comprises two PA chains **31, 33** within one module. LTE Band 40 (2.3 - 2.4 GHz) is covered by one chain **31** and the other chain **33** covering the remaining bands in the 2.496 - 2.69GHz spectrum range. This approach may be optimal for achieving RF performances and current consumption efficiency when compared to a single wideband chain. This disclosed LTE RF transmitter circuit **12** may provide cost savings and space saving over other approaches including a single wideband PA and with a separate Band 7 PA.

With this design, using a single chain for LTE Band 7/LTE Band 38 and LTE Band 41, some leakage paths are introduced via the SP2T switches, which may cause the LTE receiver circuit 13 to de-sense when in LTE Band 7 FDD operation. Careful design and positioning of the SP2T and SP3T PA fan-out switch for each path should result in achieving 75 dB of isolation (20 dB better than the isolation of a duplexer). This is achieved through 25 dB of isolation from each switch. The third switch (not shown) is that of an LNA band select switch (perhaps inside a transceiver). In FIG. 2, there are two separate LNA's **35-36** shown, whereby LTE Bands 40 and 7 are shared. In this design, the LTE Band 7 receiver **35** is isolated completely from the LTE Band 41 leakage paths when in LTE Band 7 FDD mode. Using two receive paths is a requirement for enabling inter-band carrier aggregation for Bands 38 and 40.

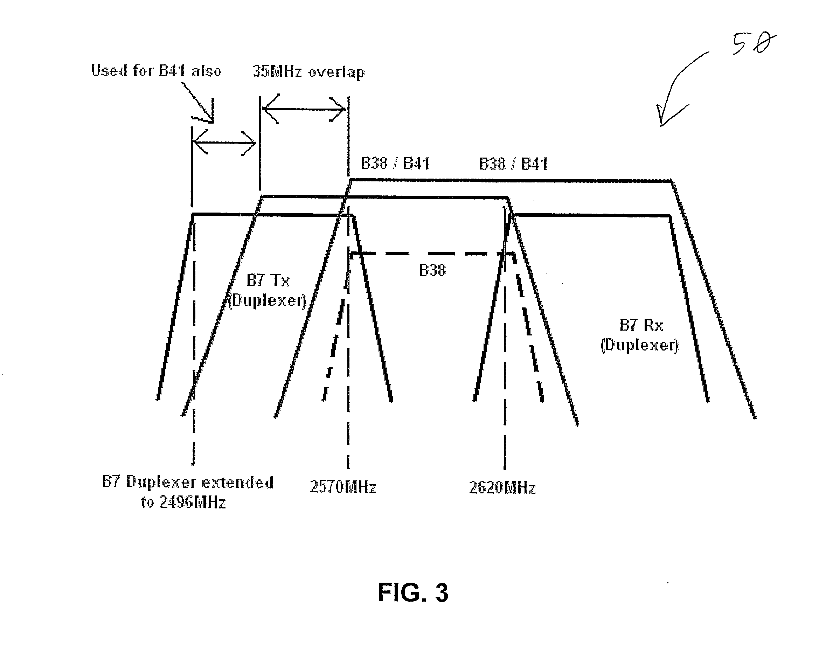

Referring now to FIG. 3, an illustration of frequency domain filter **50** responses covering the 2.496 - 2.69 GHz spectrum for the mobile wireless communications device **10.** The overlapping of each of the band pass filters' **15-18** sub-bands shows that all of the bands can be covered by using two filters and the Tx part of the LTE Band 7 duplexer to cover all of LTE Band 41. The overlapping spectrum is 35 MHz, allowing the two 20 MHz adjacent component carriers. One point to note is that the LTE Band 7 duplexer Tx response has to have a widened lower cutoff (by 4 MHz) to cover the lowest 4 MHz of LTE Band 41. This would degrade the ISM band rejection when in LTE Band 7. To mitigate this effect, there are two approaches: 1) determine if carriers are looking to roll-out the lowest 4 MHz of LTE Band 41, i.e. whether this concern is rendered mute; and 2) add an additional LTE Band 41 filter (and SP2T Tx/Rx switch) specifically for the lower end of LTE Band 41, leaving the LTE Band 7 duplexer at the standard bandwidth.

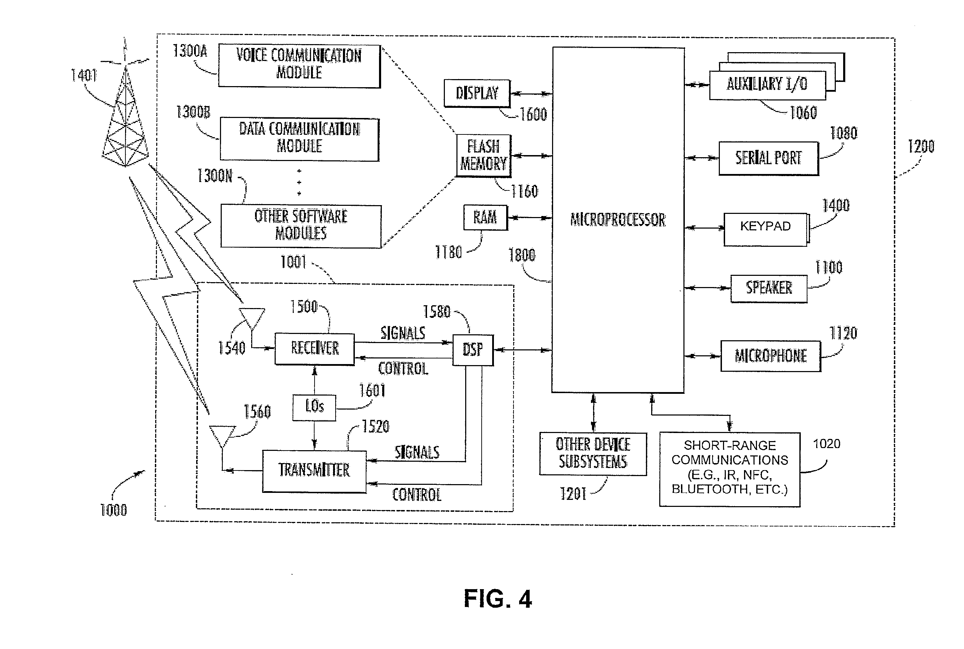

Example components of a mobile wireless communications device **1000** that may be used in accordance with the above-described embodiments are further described below with reference to FIG. 4. The device **1000** illustratively includes a housing **1200,** a keyboard or keypad **1400** and an output device **1600.** The output device shown is a display **1600,** which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 4. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) 1601. The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device 1000. The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth^{™} communications module to provide for communication with similarly-enabled systems and devices, or a NFC sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (10) comprising:
an antenna (11);
a Long Term Evolution "LTE" radio frequency "RF" transmitter circuit (12);
an LTE RF receiver circuit (13);
a plurality of band pass filters (15-18) coupled to said antenna and configured to operate at respective different LTE RF bands; and
a plurality of RF switches (21-24) coupled respectively between said plurality of band pass filters, and said LTE RF cellular transmitter and receiver circuits.

2. The mobile wireless communications device of Claim 1 wherein said LTE RF transmitter circuit comprises:
a first power amplifier "PA" (31) configured to operate on a first LTE RF band; and
a second PA (33) configured to operate on a second, third, and fourth LTE RF bands.

3. The mobile wireless communications device of Claim 2 wherein said LTE RF transmitter circuit comprises:
an RF switch (34) coupled to said second PA and configured to switch signals from the second, third, and fourth LTE RF bands to respective ones of said plurality of band pass filters.

4. The mobile wireless communications device of Claim 2 wherein said LTE RF receiver circuit comprises:
a first low-noise amplifier "LNA" (35) configured to operate on the first and second LTE RF bands; and
a second LNA (36) configured to operate on the third and fourth LTE RF bands.

5. The mobile wireless communications device of Claim 4 wherein said LTE RF receiver circuit comprises:
a first RF switch (38) coupled to said first LNA and configured to switch signals from the first and second LTE RF bands from respective ones of said plurality of band pass filters; and
a second RF switch (37) coupled to said second LNA and configured to switch signals from the third and fourth LTE RF bands from respective ones of said plurality of band pass filters.

6. The mobile wireless communications device of Claim 2 wherein the first LTE RF band comprises LTE Band 40; wherein the second LTE RF band comprises LTE Band 7; wherein the third LTE RF band comprises LTE Band 38; and wherein the fourth LTE RF band comprises LTE Band 41.

7. The mobile wireless communications device of Claim 6 wherein said LTE RF transmitter circuit is configured to operate on the LTE Bands 38 and 40 in a carrier aggregation mode.

8. The mobile wireless communications device of Claim 6 further comprising a wireless local area networking (WLAN) transceiver (40), and a WLAN antenna (41) coupled thereto; and wherein said pluralities of RF switches and band pass filters are configured to isolate said WLAN transceiver from LTE Band 41.

9. The mobile wireless communications device of Claim 6 wherein said plurality of band pass filters comprises a group thereof configured to cooperate with each other to pass the LTE Band 41.

10. The mobile wireless communications device of Claim 1 wherein each RF switch comprises a single-pole double-throw switch.

11. A method of making a mobile wireless communications device (10) comprising:
providing a Long Term Evolution "LTE" radio frequency (RF) transmitter circuit (12) and an LTE RF receiver circuit (13);
coupling a plurality of band pass filters (15-18) to the antenna (11) to operate at respective different LTE RF bands; and
coupling a plurality of RF switches (21-24) respectively between the plurality of band pass filters, and the LTE RF cellular transmitter and receiver circuits (12-13).

12. The method of Claim 11 further comprising forming the LTE RF transmitter circuit to comprise:
a first power amplifier "PA" (31) operating on a first LTE RF band; and
a second PA (33) operating on a second, third, and fourth LTE RF bands.

13. The method of Claim 12 further comprising forming the LTE RF transmitter circuit to comprise:
an RF switch (34) coupled to the second PA and switching signals from the second, third, and fourth LTE RF bands to respective ones of the plurality of band pass filters.

14. The method of Claim 12 further comprising forming the LTE RF receiver circuit to comprise:
a first low-noise amplifier "LNA" (35) operating on the first and second LTE RF bands; and
a second LNA (36) operating on the third and fourth LTE RF bands.

15. The method of Claim 14 further comprising forming the LTE RF receiver circuit to comprise:
a first RF switch (38) coupled to the first LNA and switching signals from the first and second LTE RF bands from respective ones of the plurality of band pass filters; and
a second RF switch (37) coupled to the second LNA and switching signals from the third and fourth LTE RF bands from respective ones of the plurality of band pass filters.
